(19) Europäisches Patentamt / European Patent Office / Office européen des brevets

(11) **EP 4 782 500 A1**

(12) **EUROPEAN PATENT APPLICATION**
published in accordance with Art. 153(4) EPC

(43) Date of publication:
**29.07.2026 Bulletin 2026/31**

(21) Application number: **24875683.5**

(22) Date of filing: **25.11.2024**

(51) International Patent Classification (IPC):
**C08L 29/04** $^{(2006.01)}$  **C08J 5/18** $^{(2006.01)}$
**G02B 5/30** $^{(2006.01)}$

(86) International application number:
**PCT/CN2024/134284**

(87) International publication number:
**WO 2026/091208 (07.05.2026 Gazette 2026/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.10.2024 CN 202411507815**

(71) Applicants:
• **Anhui Wanwei Updated High-Tech Material
Industry Co., Ltd**
**Hefei, Anhui 238000 (CN)**
• **Anhui Wanwei Advanced Functional Membrane
Materials Research Institute Co., Ltd**
**Hefei, Anhui 230000 (CN)**

(72) Inventors:
• **WU, Fusheng**
**Hefei, Anhui 238000 (CN)**

• **TANG, Chenghong**
**Hefei, Anhui 238000 (CN)**
• **XIANG, Xueyi**
**Hefei, Anhui 238000 (CN)**
• **SUN, Xianwu**
**Hefei, Anhui 238000 (CN)**
• **ZHANG, Qianlei**
**Hefei, Anhui 238000 (CN)**
• **WANG, Xiaoxi**
**Hefei, Anhui 238000 (CN)**
• **LI, Jiaming**
**Hefei, Anhui 238000 (CN)**
• **LIU, Tao**
**Hefei, Anhui 238000 (CN)**
• **WANG, Daoliang**
**Hefei, Anhui 238000 (CN)**

(74) Representative: **Jacobi, Markus Alexander
Patentanwälte
Isenbruck Bösl Hörschler PartG mbB
Eastsite One
Seckenheimer Landstrasse 4
68163 Mannheim (DE)**

(54) **POLYVINYL ALCOHOL FILM AND PREPARATION METHOD THEREFOR**

(57) The present application provides a polyvinyl alcohol film and a preparation method therefor. The saturated water absorption of the amorphous structure in the polyvinyl alcohol film is x, the water absorption increased due to destruction of the crystal surface defect structure in the polyvinyl alcohol film is y, and x/(x+y) is 0.82 to 0.93. The polyvinyl alcohol film has a softening point of 65°C to 75°C, and a degree of swelling of 180% to 220%.

EP 4 782 500 A1

**Description**

**CROSS-REFERENCE TO RELATED APPLICATIONS**

This application claims priority to Chinese Patent Application No. 202411507815.9, filed on October 28, 2024, the entire contents of which are incorporated herein by reference.

**TECHNICAL FIELD**

The present application relates to the technical field of polyvinyl alcohol films, and in particular to a polyvinyl alcohol film and a preparation method therefor.

**BACKGROUND**

Polyvinyl alcohol (PVA) film is mainly used to prepare polarizing film, and its end products are used in various types of liquid crystal displays, such as display panels for televisions, computer monitors, mobile phones, car navigation and wearable electronic devices. The retention rate of the optical properties of PVA polarizing film under high temperature and high temperature and high humidity environment is a key indicator for evaluating the durability of PVA polarizing film. As display panels develop towards thinner, more durable and more transparent directions, especially in automotive applications, higher and higher requirements are placed on the durability of PVA polarizing film and its upstream optical film.

**SUMMARY**

The main purpose of the present application is to provide a polyvinyl alcohol (PVA) film, aiming to improve the durability of the PVA polarizing film.

To achieve the above purpose, the present application provides a polyvinyl alcohol film, saturated water absorption of the amorphous structure in the polyvinyl alcohol film is x, water absorption increased due to destruction of a crystal surface defective structure in the polyvinyl alcohol film is y, and x/(x+y) is 0.82 to 0.93; the polyvinyl alcohol film has a softening point of 65°C to 75°C and a degree of swelling of 180% to 220%.

In an embodiment, x/(x+y) is 0.84 to 0.89.

In an embodiment, the polyvinyl alcohol film has a crystallinity of 35% to 45%, and a melting point of 210°C to 230°C.

In an embodiment, measuring the saturated water absorption of the amorphous structure in the polyvinyl alcohol film includes:

immersing at least one portion of the polyvinyl alcohol film in deionized water at a preset temperature for a preset time t1;

removing the polyvinyl alcohol film after the amorphous structure in the polyvinyl alcohol film absorbs water;

scraping off water droplets on a surface of the polyvinyl alcohol film and weighing the polyvinyl alcohol film, denoted as $m_{x1}$;

drying and weighing the polyvinyl alcohol film, denoted as $m_{x2}$; and

calculating the saturated water absorption x of the amorphous structure in the polyvinyl alcohol film using $x = (m_{x1} - m_{x2}) / m_{x2} \times 100\%$;

measuring a sum of the saturated water absorption of the amorphous structure in the polyvinyl alcohol film and the water absorption increased due to the destruction of the crystal surface defect structure in the polyvinyl alcohol film includes:

immersing at least one portion of the polyvinyl alcohol film in deionized water at a preset temperature for a preset time t2 to destroy the crystal surface defect structure in the polyvinyl alcohol film;

after the water absorption of the destroyed crystal surface defect structure is completed, taking out the polyvinyl alcohol film, scraping off water droplets on a surface of the polyvinyl alcohol film and weighing the polyvinyl alcohol film, denoted as $m_{x3}$;

drying and weighing the polyvinyl alcohol film, denoted as mx4; and

calculating a sum of the saturated water absorption of the amorphous structure in the polyvinyl alcohol film and the water absorption increased due to the destruction of the crystal surface defect structure in the polyvinyl alcohol film using $x+y = (m_{x3} - m_{x4})/m_{x4} \times 100\%$.

In an embodiment, the preset temperature is 30°C, the preset time t1 is 1 min, and the preset time t2 is 15 min.

The present application further provides a preparation method for a polyvinyl alcohol film, including:

dissolving polyvinyl alcohol and additives in a solvent to obtain a casting solution;
defoaming, casting and pre-drying the casting solution to obtain a pre-dried film;
heat treating the pre-dried film to obtain a polyvinyl alcohol film.

In an embodiment, in the step of defoaming, casting and pre-drying the casting solution to obtain the pre-dried film, water content of a liquid film after casting is 15% to 35%; and/or

in the step of defoaming, casting and pre-drying the casting solution to obtain the pre-dried film, the pre-dried film has water content of 8% to 15%; and/or
in the step of heat treating the pre-dried film to obtain the polyvinyl alcohol film, the polyvinyl alcohol film has water content of 0.1% to 5%.

In an embodiment, the liquid film after casting has water content of 18% to 30%; and/or the polyvinyl alcohol film has water content of 0.5% to 3.5%.
In an embodiment, the heat treating the pre-dried film to obtain the polyvinyl alcohol film includes:
sequentially heat treating the pre-dried film using n temperature zones to obtain the polyvinyl alcohol film, wherein temperature of the n temperature zones presents a trend of first increasing and then decreasing, and n is greater than or equal to 2 and less than or equal to 20.
In an embodiment, the sequentially heat treating the pre-dried film using the n temperature zones to obtain the polyvinyl alcohol film, temperature of the n temperature zones presenting a trend of first increasing and then decreasing, includes:

the heat treating for the pre-dried film is a time of t, in 0%t to 20%t, heat treating the pre-dried film at a first temperature zone between 50°C and 80°C;
in 20%t to 40%t, heat treating the pre-dried film at a second temperature zone between 55°C and 95°C;
in 40%t to 60%t, heat treating the pre-dried film at a third temperature zone between 70°C and 100°C;
in 60%t to 80%t, heat treating the pre-dried film at a fourth temperature zone between 100°C and 130°C;
in 80%t to 100%t, heat treating the pre-dried film at a fifth temperature zone between 50°C and 98°C; and
obtaining the polyvinyl alcohol film.

In an embodiment, the sequentially heat treating the pre-dried film using the n temperature zones includes:

drying the pre-dried film using a fan;
wherein a wind speed of the fan in the first temperature zone is 5.9m/s to 12.4m/s, a wind speed of the fan in the second temperature zone is 6.6m/s to 13.1m/s, a wind speed of the fan in the third temperature zone is 13.2m/s to 19.7m/s, a wind speed of the fan in the fourth temperature zone is 10.5m/s to 17.0m/s, and a wind speed of the fan in the fifth temperature zone is 11.5m/s to 18.0m/s.

In an embodiment, the wind speed of the fan in the first temperature zone is 8.1m/s to 10.3m/s, the wind speed of the fan in the second temperature zone is 8.8m/s to 10.9m/s, the wind speed of the fan in the third temperature zone is 15.4m/s to 17.5m/s, the wind speed of the fan in the fourth temperature zone is 12.7m/s to 14.9m/s, and the wind speed of the fan in the fifth temperature zone is 13.7m/s to 15.8m/s.
The present application proposes a PVA film, the saturated water absorption of the amorphous structure in the PVA film is x, the water absorption increased by the crystal surface defect structure destruction in the PVA film is y, and x/(x+y) is 0.82 to 0.93. The softening point of the PVA film is 65°C to 75°C, and the degree of swelling of the PVA film is 180% to 220%. x is the saturated water absorption of the amorphous structure in the PVA film, y is the increased water absorption in the PVA film due to the destruction of the crystal surface defect structure, x/(x+y) is 0.82 to 0.93. The softening point of the PVA film is 65°C to 75°C, and the degree of swelling of the PVA film is 180% to 220%. Under the above conditions, the durability of the PVA polarizing film prepared using the PVA film is improved.

## DETAILED DESCRIPTION OF THE EMBODIMENTS

The technical solutions in the embodiments of the present application will be described clearly and completely below in combination with the embodiments. Obviously, the described embodiments are some rather than all of the embodiments of the present application. Based on the embodiments in the present application, all other embodiments obtained by those skilled in the art without creative efforts are within the scope of the present application.

"Range" disclosed in the present application is defined by a lower limit and an upper limit. A given range is defined by selecting a lower limit and an upper limit, and the selected lower limit and upper limit define the boundaries of a special range. The range defined in this way can be inclusive or exclusive of the end values, and any combination is possible, meaning that any lower limit can be combined with any upper limit to form a range. For example, if ranges of 60-120 and 80-110 is listed for a specific parameter, it is understood that the ranges of 60-110 and 80-120 are intended. In addition, if the minimum range values 1 and 2 are listed, and the maximum range values 3, 4 and 5 are listed, the following ranges can be all expected: 1-3, 1-4, 1-5, 2-3, 2-4 and 2-5. In the present application, unless otherwise specified, the numerical range "a-b" represents the abbreviation of any combination of real numbers between a and b, where a and b are real numbers. For example, the numerical range "0-5" means that all real numbers between 0 and 5 are listed in this document, and "0-5" is just an abbreviation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, etc.

Unless otherwise specified, all embodiments and optional embodiments of the present application can be combined to form a new technical solution.

Unless otherwise specified, all technical features and optional technical features of the present application can be combined to form a new technical solution.

Unless otherwise specified, all steps of the present application can be performed sequentially or randomly, preferably sequentially. For example, the method includes steps (a) and (b), which means that the method may include steps (a) and (b) performed sequentially, or may include steps (b) and (a) performed sequentially. For example, it is mentioned that the method may also include step (c), which means that step (c) can be added to the method in any order. For example, the method may include steps (a), (b) and (c), or may include steps (a), (c) and (b), or may include steps (c), (a) and (b), etc.

One of the factors affecting the durability of the polarizing film includes the stability of the PVA-iodine complex in the polarizing film. The stability of the PVA-iodine complex is further affected by the structure of the PVA film. The specific surface area, stability and crystal content of the crystals in the PVA film determine the content and stability of the fibrous PVA-polyiodide ion composite structure formed during the processing of the polarizing film. The PVA film that meets the following conditions of the present application has a crystal network with a high crystal specific surface area, sufficient crystal content and suitable crystal stability, which is conducive to obtaining a polarizing film with excellent durability.

The specific conditions are: $x/(x+y)$ is 0.82 to 0.93, x is the saturated water absorption of the amorphous structure in the PVA film, and y is the increased water absorption in the PVA film due to the destruction of the crystal surface defect structure. The softening point of the PVA film is 65°C to 75°C, and the swelling ratio of the PVA film is 180% to 220%.

Specifically, during the processing of PVA polarizing film, the PVA optical film is dyed and stretched to form dichroic dye molecules mainly composed of $PVA\text{-}I_3^-$ and $PVA\text{-}I_5^-$ arranged along the orientation direction of the PVA chain, which is a key structure affecting the optical properties of the polarizing film. During the use of the polarizing film, under the long-term high temperature or high temperature and high humidity conditions, the complexed polyiodide ions will undergo changes such as decomplexation, decomposition or oxidation, and diffuse out of the system in the form of iodine vapor, causing the ratio of iodine $PVA\text{-}I_3^-$ to $PVA\text{-}I_5^-$ inside the polarizing film to change. Macroscopically, it gradually manifests as the polarizing film transmitting red light, transmitting blue light, and the overall color becoming lighter and unable to display, which seriously affects the imaging performance of the display panel and even causes a white screen failure. Therefore, how to improve the stability of polyiodide ions ($PVA\text{-}I_3^-$, $PVA\text{-}I_5^-$) in polarizing films is the key to improving the durability of polarizing films, especially polarizing films used in automotive applications.

At present, the solution to improve the durability of PVA polarizing film is mainly to adjust the protective film composition, adhesive process, dyeing process and boric acid cross-linking agent during the processing of the polarizing film. Although the above solutions can solve the problem of poor durability to a certain extent, they inevitably introduce other problems, such as reduced transmittance of polarizing film, decreased mechanical properties, increased thickness, difficulties in production line, large-scale equipment modification, and significantly increased costs. It is difficult to obtain PVA polarizing film with excellent performance in all aspects.

The structural factors that determine the durability of the polarizing film considered in the present application include the stability of the PVA-iodine complex, which is determined to a certain extent by the chemical composition and microstructure of the upstream material PVA optical film. The larger the specific surface area of the PVA crystal, the more amorphous regions around the crystal, and the more stable the $PVA\text{-}I_3^-$ and $PVA\text{-}I_5^-$ are formed. The process adjustment of the polarizing film processing can only play a partial improvement effect, while the durability optimization from the upstream PVA optical film material has the advantages of more significant effect and less impact on the process, equipment, and product performance of the downstream polarizing film processing.

The present application proposes a PVA film, the saturated water absorption of the amorphous structure in the PVA film is x, the water absorption increased by the crystal surface defect structure destruction in the PVA film is y, and $x/(x+y)$ is 0.82 to 0.93. The softening point of the PVA film is 65°C to 75°C, and the degree of swelling of the PVA film is 180% to 220%.

The amorphous region of a polymer material refers to a region where the polymer chain segments are not arranged in a regular parallel manner.

The polymer crystal structure refers to a structure formed by the regular parallel arrangement of the molecular chain segments.

The crystal defect in a polymer refers to a crystal region where the molecular chain segments are arranged irregularly and have poor stability, generally at the interface of the crystal and the amorphous region, i.e., the crystal surface.

x is the saturated water absorption of the amorphous structure in the PVA film, y is the increased water absorption in the PVA film due to the destruction of the crystal surface defect structure, x/(x+y) is 0.82 to 0.93. The softening point of the PVA film is 65°C to 75°C, and the degree of swelling of the PVA film is 180% to 220%. Under the above conditions, the durability of the PVA polarizing film prepared using the PVA film is improved.

It can be understood that PVA is a semi-crystalline polymer, which is composed of a crystalline structure and an amorphous structure. The crystal exists between the amorphous regions in the form of physical cross-linking points, and together with the amorphous structure, forms a crystalline cross-linking network. The saturated water absorption x of the amorphous structure in the PVA film is related to the content of the amorphous structure. The water absorption y increased by destruction of the crystal surface defect structure in the PVA film is related to the content, stability and specific surface area of the crystal structure. It can be understood that, because there are defects on the surface of the crystal, under the action of certain temperature and water, the defective structure on the surface of the crystal gradually dissolves and becomes an amorphous region. The water absorption increased due to the destruction of the crystal surface defective structure in the PVA film refers to the water absorption increased when the structure becomes amorphous. Experiments have found that the polarizing film prepared by the PVA film that meets the above conditions (x/(x+y) is 0.82 to 0.93) has good durability, and the softening point and the degree of swelling of the PVA film meet the above ranges. It can be understood that the specific surface area, stability and content of the crystal of the PVA film determine the content and stability of the fibrous PVA-polyiodide ion composite structure formed during the processing of the polarizing film. A crystal network with a high crystal specific surface area, sufficient crystal content and appropriate crystal stability is conducive to obtaining a polarizing film with excellent durability.

It can be understood that when the PVA film absorbs water and swells in water, the amorphous structure absorbs water and swells first, which is a relatively fast process. Then, water molecules gradually break the hydrogen bonds of the defective structure on the surface of the PVA crystals, destroying the less stable defective structure until a stable crystal is encountered. This process is relatively slow, and the less stable defective structure can be considered as being wrapped around the stable crystal. Therefore, a higher proportion of less stable defective structures is equivalent to a larger specific surface area of the crystal particles and smaller individual crystal size. At the same time, the softening point and the degree of swelling of the PVA film meet the above range. The PVA film that meets the above conditions has an appropriate amount of crystal content and stability, and a large crystal specific surface area.

It can be understood that the softening point and the degree of swelling of the PVA film meet the above ranges, and the PVA film has a high crystal specific surface area (small and numerous crystals), sufficient crystal content, and a stable crystal network, which is beneficial to improving the dyeing efficiency, dyeing color and durability when preparing the polarizing film, and reducing the risk of film breakage when stretching the polarizing film.

It can be understood that if the softening point of the PVA film is too high and the degree of swelling is too low, it is highly likely that its crystallinity is too high, which will lead to reduced dyeing efficiency, as well as poorer dyeing chromaticity and durability during the preparation of the polarizing film. If the softening point is too low and the degree of swelling is too high, it is highly likely that its crystallinity is too low, which will cause an increase in the dissolution of PVA during the preparation of the polarizing film, and a decrease in the elongation at break, making the film prone to breakage during stretching.

In the above 0.82 to 0.93, the values include the minimum and maximum values of the range, and each value between the minimum and maximum values. Specific examples include but are not limited to the point values in the embodiment and 0.82, 0.83, 0.84, 0.85, 0.86, 0.87, 0.88, 0.89, 0.90, 0.91, 0.92, 0.93, etc., and the range value between any two of the above point values.

In an embodiment, when x/(x+y) is 0.84 to 0.89, the durability of the PVA polarizing film prepared using the PVA film is better.

In the above 0.84 to 0.89, the values include the minimum and maximum values of the range, and each value between the minimum and maximum values. Specific examples include but are not limited to the point values in the embodiment and 0.84, 0.85, 0.86, 0.87, 0.88, 0.89, etc., and the range values between any two of the above point values.

In an embodiment, the crystallinity of the PVA film is 35% to 45%, and the melting point of the PVA film is 210°C to 230°C.

Crystallinity is an important parameter to measure the proportion of the crystalline part in the material.

The crystal melting point refers to the temperature corresponding to the fastest melting rate of a polymer crystal when it is heated and melted at a certain heating rate. The melting point of a material can be tested by differential scanning calorimetry (DSC). DSC is a thermal analysis technique that can measure the heat difference between a sample and a reference under a precisely controlled temperature program. During the heating, when the sample melts, it absorbs heat and an endothermic peak appears. By analyzing the peak shape characteristics of these peaks, information such as the melting point and the melting enthalpy can be obtained.

The moisture content of PVA film was measured using a Mettler-Toledo HE-53 halogen moisture analyzer or other equivalent equipment, under the conditions of 120°C for 40 minutes.

The melting point and crystallinity were measured using a differential scanning calorimeter (DSC). The sample is heated from 40°C to 240°C at a heating rate of 10°C. The endothermic peak observed is the melting peak of the PVA crystal. The melting point is determined and the integrated enthalpy value is calculated. The enthalpy value $\Delta Hc$ of 100% crystalline PVA is 138.6 J/g, and the crystallinity was calculated using the following formula:

$$crystallinity = \frac{\frac{integrated\ enthalpy\ value}{138.6\ J/g} \times 100\%}{1 - moisture\ content} \times 100\%$$

The softening point refers to the temperature at which PVA begins to soften and become fluid during heating. The measurement for the softening point can refer to the American Society for Testing and Materials standard ASTM D36-95 "Asphalt Softening Point Determination Method" to perform the measurement of the softening point of PVA film.

The PVA film is fixed in a copper ring of specified shape and size, and a steel ball with a mass of 3.5g is placed in the center of the copper ring. It is immersed in deionized water and heated at a rate of 5°C/min until the PVA film softens and sags, and the steel ball sags more than 25mm. The water temperature at this time is recorded.

The softening point can measure the size, perfection and content of the crystal. A high softening point generally indicates a larger crystal size, a more perfect crystal structure, and a higher content; a low softening point generally indicates a smaller crystal size, more defects in the crystal structure, and a lower content.

The degree of swelling refers to the parameter of the material's characteristic of absorbing liquid and expanding in liquid. The measurement method for the degree of swelling is as follows: cutting a $10\times200$mm film sample; swelling the film sample in 500mL of 30°C water for 30 minutes; centrifuging the film sample at 3000rpm for 5min; weighing the film sample as m10; drying the sample in a blast oven at 120°C for 2h; and taking out the sample and weighing the sample again as m20. The degree of swelling is m10/m20×100%. The degree of swelling usually represents the content of the amorphous region of PVA. The greater the degree of swelling, the more amorphous regions there are, and the lower the crystallinity. The smaller the degree of swelling, the fewer amorphous regions there are, and the higher the crystallinity.

It can be understood that the crystallinity and melting point of the PVA film meet the above range, which is conducive to obtaining a crystal cross-linked network with a high crystal specific surface area, suitable crystal stability and sufficient crystal content, and reducing the risk of film breakage when stretching the polarizing film.

In the above 35% to 45%, the value includes the minimum and maximum values of the range, and each value between the minimum and maximum values. Specific examples include but are not limited to the point values in the embodiment and 35%, 36%, 37%, 38%, 39%, 40%, 41%, 42%, 43%, 44%, 45%, etc., and the range value between any two of the above point values.

In the above 210°C to 230°C, the values include the minimum and maximum values of the range, and each value between the minimum and maximum values. Specific examples include but are not limited to the point values in the embodiment and 210°C, 211°C, 212°C, 213°C, 214°C, 215°C, 217°C, 219°C, 220°C, 221°C, 224°C, 225°C, 227°C, 228°C, 229°C, 230°C, etc., and the range values between any two of the above point values.

In the above 65°C to 75°C, the values include the minimum and maximum values of the range, and each value between the minimum and maximum values. Specific examples include but are not limited to the point values in the embodiment and 65°C, 66°C, 67°C, 68°C, 69°C, 70°C, 71°C, 72°C, 73°C, 74°C, 75°C, etc., and the range values between any two of the above point values.

In the above 180% to 220%, the values include the minimum and maximum values of the range, and each value between the minimum and maximum values. Specific examples include but are not limited to the point values in the embodiment and 180%, 181%, 183%, 184%, 187%, 189%, 190%, 191%, 192%, 194%, 196%, 199%, 200%, 201%, 205%, 210%, 211%, 215%, 218%, 220%, etc., and the range value between any two of the above point values.

In an embodiment, during the process of testing x/(x+y), the following steps can be used. Specifically, at least two PVA films to be tested are prepared, at least one is test to obtain the x value, and at least another is test to obtain the x+y value.

The step of obtaining the x value includes: soaking at least one of the PVA films in deionized water at a preset temperature for a preset time t1, taking out the PVA film after the amorphous structure in the PVA film finishes absorbing water, scraping off the water droplets on the surface of the PVA film and weighing the PVA film, which is calculated as $m_{x1}$, and drying and weighing the PVA film, which is calculated as $m_{x2}$. The saturated water absorption x of the amorphous structure in the PVA film is $(m_{x1} - m_{x2}) / m_{x2}$ *100%.

The step of obtaining the x+y value includes: soaking at least another PVA film in deionized water at a preset temperature for a preset time t2 to destroy the crystal surface defect structure in the PVA film; taking out the PVA film after the destroyed crystal surface defect structure absorbs water, scraping off the water droplets on the surface of the PVA film and weighing the PVA film, which is calculated as $m_{x3}$; and drying and weighing the PVA film, which is calculated as $m_{x4}$. The sum x+y of the saturated water absorption of the amorphous structure in the PVA film and the increased water absorption of the PVA film due to the destruction of the crystal surface defect structure is $(m_{x3} - m_{x4}) / m_{x4}$ *100%.

During the above test, the preset temperature can be 15°C to 45°C, t1 and t2 can be 0.1min to 30min, and the thickness of the PVA film to be tested can be 30um to 60um. It can be understood that as the temperature increases, the water absorption rate of the PVA film will increase and the water absorption time will shorten. During testing the water absorption ratio, the water absorption time is controlled according to the actual test conditions.

In an embodiment, the preset temperature is 30°C, t1 is 1min, and t2 is 15min.

It can be understood that the water absorption rate of the PVA film at different temperatures is different. Theoretically, the higher the temperature, the faster the water absorption rate. In the present application, the water absorption of the PVA film at 30°C in 1 minute can be used as the water absorption of the amorphous structure, and the water absorption in 15 minutes can be used as the sum of water absorption of the amorphous structure in the PVA film and the water absorption increased due to the destruction of the crystal surface defect structure in the PVA film. That is, it can be considered that the ratio of the water absorption of the PVA film at 30°C in 1 minute to the water absorption in 15 minutes is 0.82 to 0.93. It can be understood that the durability of the polarizing film is better in the range of 0.84 to 0.89.

It can be understood that the ratio of the water absorption of the PVA film in 1 minute to the water absorption in 15 minutes at 30°C can represent the ratio of the fast swelling part (amorphous structure) to the slow swelling part (amorphous structure + increased water absorption due to the destruction of the crystal surface defect structure) in the PVA film, which respectively correspond to the swelling of the amorphous region and the dissolution process of the crystal surface defect structure. The smaller the ratio, the larger the specific surface area of the crystal, the smaller the average volume, and the less stable the crystal. The larger the ratio, the smaller the specific surface area of the crystal, the larger the average volume, and the more stable the crystal. The size, stability and number of crystal structures in the PVA network structure will affect the complex stability of hydroxyl groups and iodide ions in the PVA network structure. The PVA network structure that meets the above ratio has a large number of small-sized crystal structures, and also has an appropriate amount of crystal structures. The iodine ions are more stably complexed with hydroxyl groups in the above PVA network structure, making it difficult for iodine to separate from the PVA network structure. That is, the more stable the polyiodide ions formed by PVA and iodine are, the less likely they are to be destroyed by high temperature and high humidity environments, thereby improving the durability of the PVA polarizing film prepared using the PVA film.

It can be understood that when PVA swells in water, the amorphous region first absorbs water and expands. For PVA films with a thickness of 30um to 60um, this process mainly occurs within one minute. Subsequently, water molecules gradually destroy the hydrogen bonds of the surface defect structure of the PVA crystal, destroying the less stable crystal surface defect structure until a stable crystal is encountered. This process is slow and is currently believed to be basically completed within 15 minutes at 30°C. The less stable crystal surface defect structure is considered as being wrapped around the stable crystal. Therefore, the greater the proportion of less stable crystal surface defect structures, the larger the specific surface area of the crystal particles and the smaller the size of individual crystal.

It can be understood that the crystalline state of polymer films is mainly analyzed by DSC crystallography and X-ray crystallography in the field of basic research. These analysis methods are costly, difficult, and difficult to process data, and are prone to large errors. The present application evaluates the crystallization properties of PVA films by the water absorption and swelling behavior of the amorphous state and the crystal surface defective structure of the PVA film. The crystal state is mainly determined based on the kinetic analysis of the swelling rate. Furthermore, conventional evaluation methods such as softening point and the degree of swelling are combined to characterize the polymer crystals.

In the above 15°C to 45°C, the values include the minimum and maximum values of the range, and each value between the minimum and maximum values. Specific examples include but are not limited to the point values in the embodiment and 15°C, 18°C, 20°C, 25°C, 30°C, 35°C, 40°C, 45°C, etc., and the range values between any two of the above point values.

In the above 0.1min to 30min, the values include the minimum and maximum values of the range, and each value between the minimum and maximum values. Specific examples include but are not limited to the point values in the embodiment and 0.1min, 0.5min, 1min, 5min, 10min, 12min, 16min, 19min, 20min, 22min, 25min, 28min, 30min, etc., and the range values between any two of the above point values.

In the above 30um to 60um, the values include the minimum and maximum values of the range, and each value between the minimum and maximum values, and specific examples include but are not limited to the point values in the embodiment and 30um, 32um, 35um, 38um, 40um, 45um, 50um, 55um, 60um, etc., and the range value between any two of the above point values.

In an embodiment, the present application also provides a preparation method for the PVA film, including:

dissolving PVA and additives in a solvent to obtain a casting solution; defoaming, casting and pre-drying the casting solution to obtain a pre-dried film; and performing heat treatment on the pre-dried film to obtain the PVA film.

For example, PVA and additives are dissolved in a solvent to prepare the casting solution, which is then extruded and defoamed, cast through a die, pre-dried by a drying roller, dried in a heat treatment oven, and finally rolled up to obtain the PVA film.

In an embodiment, in the step of defoaming, casting, and pre-drying the casting solution to obtain the pre-dried film, the water content of the liquid film after casting is 15% to 35%. It can be understood that if the water content of the liquid film after casting is controlled too high, it will be difficult to peel off, and the load of the subsequent pre-drying stage will increase. If the water content of the liquid film after casting is controlled too low, the equipment load will be too large and the productivity will decrease.

In an embodiment, the casting solution is defoamed, cast and pre-dried to obtain the pre-dried film, and the water content of the pre-dried film is 8% to 15%. It can be understood that too low water content is not conducive to the formation of a uniform and dense PVA crystal network, so that the prepared PVA optical film has a larger crystallinity and a smaller specific surface area, resulting in poor stability of the crystal cross-linking network, which is not conducive to improving the durability of the polarizing film and the tensile properties will also deteriorate. For example, if the water content of the pre-dried film is too low, it may cause uneven crystal growth, forming a loose network structure, and affecting the stretchability of the material.

Too high moisture content is not conducive to the subsequent heat treatment process. For example, during the heat treatment process of a pre-dried film that is not fully dried, the residual moisture will turn into steam due to heating, which may cause dripping. This will affect the appearance and quality of the product. If a plasticizer (such as glycerol) is added to the pre-dried film, during the heat treatment process, if the moisture content is too high, the plasticizer may migrate to the surface of the material along with the moisture and evaporate, and gradually condense into droplets on the surface of the film, which will also cause the film appearance to deteriorate and the tensile properties to deteriorate.

In an embodiment, in the step of heat treating the pre-dried film to obtain the PVA film, the water content of the PVA film is 0.1% to 5%. It can be understood that if the water content is too low, it is easy to cause high crystallinity, small crystal specific surface area, and difficulty in dyeing during the processing of the polarizing film; if the water content is too high, it can result in low crystallinity and an increased amount of PVA dissolved in the production, leading to reduced tensile strength of the film and an increased tendency for the film to break during stretching.

In the above 8% to 15%, the values include the minimum and maximum values of the range, and each value between such minimum and maximum values, and specific examples include but are not limited to the point values in the embodiment and 8%, 9%, 10%, 11%, 12%, 13%, 14%, 15%, etc., and the range values between any two of the above point values.

In the above 0.1% to 5%, the values include the minimum and maximum values of the range, and each value between such minimum and maximum values, and specific examples include but are not limited to the point values in the embodiment and 0.1%, 0.3%, 0.5%, 0.8%, 1%, 2%, 3%, 4%, 5%, etc., and the range values between any two of the above point values.

In the above 15% to 35%, the values include the minimum and maximum values of the range, and each value between the minimum and maximum values. Specific examples include but are not limited to the point values in the embodiment and 15%, 17%, 19%, 20%, 22%, 25%, 28%, 30%, 31%, 33%, 34%, 35%, etc., and the range values between any two of the above point values.

In an embodiment, the water content of the liquid film after cast molding is 18% to 30%.

In an embodiment, the water content of the PVA film is 0.5% to 3.5%.

In an embodiment, the step of heat treating the pre-dried film to obtain the PVA film includes: heat treating the pre-dried film in sequence using n temperature zones to obtain the PVA film. The temperature of the n temperature zones shows a trend of first increasing and then decreasing, where $2 \leq n \leq 20$.

It can be understood that the heat treatment of the pre-dried film can be carried out in one or more stages. For example, in an embodiment, a multi-stage heat treatment method is adopted, and the pre-dried film is heat-treated in sequence using n temperature zones to obtain a PVA film. The temperature of the n temperature zones shows a trend of first rising and then falling, where $2 \leq n \leq 20$. It can be understood that as the steps of casting, drying, and heat treating are gradually carried out, the PVA casting solution gradually becomes a PVA film with a low water content. In this process, the drying and crystallization processes of PVA occur synergistically. Under different water contents and temperature conditions, PVA tends to form crystals of different sizes and quantities. That is, the above-mentioned heat treatment steps help to finally obtain the PVA film with a large crystal specific surface area and a moderate degree of crystallinity.

In the above $2 \leq n \leq 20$, the values include the minimum and maximum values of the range, and every value between the minimum and maximum values. Specific examples include but are not limited to the point values in the embodiments and 2, 3, 5, 7, 9, 10, 11, 12, 15, 17, 19, 20, etc., and the range values between any two of the above point values.

In an embodiment, the step of heat treating the pre-dried film in sequence at n temperature zones to obtain a PVA film, the temperature of the n temperature zones showing a trend of first increasing and then decreasing, includes: heat treating the pre-dried film for a time of t; heat treating the pre-dried film at a first temperature zone in 0%t to 20%t, the first temperature zone is 50°C to 80°C; heat treating the pre-dried film at a second temperature zone under the condition of 20%t to 40%t, the second temperature zone is 55°C to 95°C; heat treating the pre-dried film at a third temperature zone in 40%t to 60%t, the third temperature zone is 70°C to 100°C; heat treating the pre-dried film at a fourth temperature zone in 60%t to 80%t, the fourth temperature zone is 100°C to 130°C; heat treating the pre-dried film at a fifth temperature zone, the fifth temperature zone is 50°C to 98°C in 80%t to 100%t; and obtaining the PVA film.

In an embodiment, five heat treatment steps can be used. The time for heat treatment of the pre-dried film is t, which refers to the time from the start of heat treatment to the end of heat treatment. The end of heat treatment can be determined based on the water content of the PVA film being 0.1% to 5%.

It can be understood that if the temperature in the second to fourth stages is too high, the crystal size will be too large. Conversely, if the temperature is too low, the total water content will be too high. In addition, the temperature in the fifth stage is gradually decreased to the ambient temperature to avoid the precipitation of plasticizers (such as glycerol) due to too low temperature.

In the above 50°C to 80°C, the values include the minimum and maximum values of the range, and every value between the minimum and maximum values. Specific examples include but are not limited to the point values in the embodiments and 50°C, 55°C, 60°C, 68°C, 70°C, 80°C, etc., and the range values between any two of the above point values.

In the above 55°C to 95°C, the values include the minimum and maximum values of the range, and each value between the minimum and maximum values. Specific examples include but are not limited to the point values in the embodiment and 55°C, 60°C, 68°C, 70°C, 80°C, 90°C, 95°C, etc., and the range values between any two of the above point values.

In the above 70°C to 100°C, the values include the minimum and maximum values of the range, and each value between the minimum and maximum values. Specific examples include but are not limited to the point values in the embodiment and 70°C, 80°C, 90°C, 95°C, 100°C, etc., and the range values between any two of the above point values.

In the above 100°C to 130°C, the values include the minimum and maximum values of the range, and each value between the minimum and maximum values. Specific examples include but are not limited to the point values in the embodiment and 100°C, 110°C, 115°C, 120°C, 130°C, etc., and the range values between any two of the above point values.

In the above 50°C to 98°C, the values include the minimum and maximum values of the range, and each value between the minimum and maximum values. Specific examples include but are not limited to the point values in the embodiment and 50°C, 60°C, 68°C, 70°C, 80°C, 90°C, 98°C, etc., and the range values between any two of the above point values.

In an embodiment, the step of heat treating the pre-dried film in sequence using n temperature zones includes drying the pre-dried film using a fan. The wind speed of fan at the first temperature zone is 5.9 m/s to 12.4 m/s, the wind speed of the fan at the second temperature zone is 6.6 m/s to 13.1 m/s, the wind speed of the fan at the third temperature zone is 13.2 m/s to 19.7 m/s, the wind speed of the fan at the fourth temperature zone is 10.5 m/s to 17.0 m/s, and the wind speed of fan at the fifth temperature zone is 11.5 m/s to 18.0 m/s. Furthermore, in another embodiment, the wind speed of the fan at the first temperature zone is 8.1m/s to 10.3m/s, the wind speed of the fan at the second temperature zone is 8.8m/s to 10.9m/s, the wind speed of the fan at the third temperature zone is 15.4m/s to 17.5m/s, the wind speed of the fan at the fourth temperature zone is 12.7m/s to 14.9m/s, and the wind speed of the fan at the fifth temperature zone is 13.7m/s to 15.8m/s.

It can be understood that the wind speed during the heat treatment will affect the crystal size and number of the PVA film, that is, the above wind speed will help to finally obtain a PVA film with a larger amount, smaller size and moderate total crystallinity. For example, the wind speed during the heat treatment can be adjusted by the fan frequency, and calibrated with the wind speed actually tested for the PVA film. If the wind speed is too fast, the water content will drop too fast and the crystallinity will decrease. If the wind speed is too slow, the water content will drop slowly and the crystallinity will increase.

It can be understood that the heat treatment effect of the PVA film can use the water content of the PVA film after the final heat treatment as a reference for time.

In the above-mentioned 5.9m/s to 12.4m/s, the values include the minimum and maximum values of the range, and every value between the minimum and maximum values. Specific examples include but are not limited to the point values in the embodiments and 5.9m/s, 6m/s, 6.1m/s, 6.7m/s, 7m/s, 7.5m/s, 8m/s, 9m/s, 9.6m/s, 10m/s, 11m/s, 12m/s, 12.4m/s, etc., and the range value between any two of the above-mentioned point values.

In the above-mentioned 6.6m/s to 13.1m/s, the values include the minimum and maximum values of the range, and every value between the minimum and maximum values. Specific examples include but are not limited to the point values in the embodiments and 6.6m/s, 6.7m/s, 7m/s, 7.5m/s, 8m/s, 9m/s, 9.6m/s, 10m/s, 11m/s, 12m/s, 13.1m/s, etc., and the range value between any two of the above-mentioned point values.

In the above 13.2m/s to 19.7m/s, the values include the minimum and maximum values of the range, and every value between the minimum and maximum values. Specific examples include but are not limited to the point values in the embodiment and 13.2m/s, 13.7m/s, 14m/s, 14.5m/s, 15m/s, 16m/s, 16.6m/s, 17m/s, 18m/s, 19m/s, 19.7m/s, etc., and the range value between any two of the above point values.

In the above 10.5m/s to 17.0m/s, the values include the minimum and maximum values of the range, and every value between the minimum and maximum values. Specific examples include but are not limited to the point values in the embodiments and 10.5m/s, 10.7m/s, 11m/s, 12.5m/s, 13m/s, 14m/s, 15.6m/s, 16m/s, 17m/s, etc., and the range value between any two of the above point values.

In the above-mentioned 11.5m/s to 18.0m/s, the values include the minimum and maximum values of the range, and every value between the minimum and maximum values. Specific examples include but are not limited to the point values in the embodiments and 11.5m/s, 11.7m/s, 12m/s, 12.5m/s, 13m/s, 14m/s, 15.6m/s, 16m/s, 17m/s, 18.0m/s, etc., and the range value between any two of the above-mentioned point values.

In an embodiment, the degree of polymerization of PVA is 1200 to 4000. It can be understood that if the degree of polymerization is too low, the stability of the molecular chain entanglement network of the prepared PVA polarizing film will be worse, the polyiodide ion will be less stable, and the durability will be less favorable. Conversely, if the degree of polymerization is too high, it will cause excessive tensile tension during the processing of the polarizing film, excessive internal stress of the polarizing film product, and serious shrinkage problems will occur under high temperature and high humidity.

In an embodiment, the degree of alcoholysis of PVA is 98% to 99.9%. It can be understood that if the degree of alcoholysis is too low, the stability of the hydrogen bond network of the prepared PVA polarizing film will be worse, the polyiodide ion will be less stable, and the film durability will be worse under high temperature and high humidity.

In an embodiment, the PVA includes at least one of a PVA homopolymer and a PVA copolymer. The comonomer for preparing the PVA copolymer includes at least one of olefins, acrylates, methacrylates, methacrylamide derivatives, vinyl esters, and halogenated vinyls, and the mass percentage of the comonomer relative to the vinyl alcohol monomer is 0% to 10%. It can be understood that if the mass percentage of the comonomer relative to the vinyl alcohol monomer is too high, the solubility of the PVA and the optical properties of the PVA film will be affected.

The test steps of the degree of polymerization of PVA are as follows: dissolving the PVA raw material to prepare a solution with a mass concentration of about 0.5%, the accurate mass concentration is measured by dry weighing method, recorded as c; measuring the concentration of the solution using an Ostwald viscometer fixed in a constant temperature bath, and measuring the time required for the sample and deionized water to flow through the upper and lower scale lines of the viscometer, recorded as $S_0$ and S respectively, in seconds. The degree of polymerization PA is calculated according to the following formula:

$$\log PA = 1.613 * \log(2778 \times \frac{\log\frac{S}{S_0}}{c})。$$

The alcoholysis degree usually refers to the percentage of hydroxyl groups in the product after the alcoholysis reaction.

The test steps for the alcoholysis degree are as follows: weighing 1~2 mg of PVA(PVA) raw material, adding and dissolving 0.5 mL of deuterated dimethyl sulfoxide (DMSO-$D_6$), and measuring 1H NMR. In the nuclear magnetic hydrogen spectrum, the peak at 1.0~1.8 ppm (-$CH_2$ in PVA) is integrated first, the integral area of the peak is normalized to "200", and then the multiple peaks at 1.85~2.06 ppm (-CH3 peaks of the unalcoholized part of PVA) is integrated. The integral area is a, and the calculation formula for the alcoholysis degree is as follows: alcoholysis degree(%) = 100 - a/3

In the above 1200 to 4000, the values include the minimum and maximum values of the range, and each value between such minimum and maximum values, and specific examples include but are not limited to the point values in the embodiment and 1200, 1500, 1800, 2000, 2500, 3000, 3500, 4000, etc., and the range values between any two of the above point values.

In the above 98% to 99.9%, the values include the minimum and maximum values of the range, and each value between such minimum and maximum values, and specific examples include but are not limited to the point values in the embodiment and 98%, 98.5%, 99.0%, 99.5%, 99.9%, etc., and the range values between any two of the above point values.

In the above 0% to 10%, the values include the minimum and maximum values of the range, and each value between the minimum and maximum values. Specific examples include but are not limited to the point values in the embodiment and 0.1%, 0.5%, 1%, 2%, 5%, 6%, 7%, 9%, 10%, etc., and the range values between any two of the above point values.

In an embodiment, the degree of polymerization of PVA is 2000 to 3500.

In an embodiment, the degree of alcoholysis of PVA is 99% to 99.9%.

In an embodiment, the olefins include non-polar α-olefin comonomers, and the mass percentage of the non-polar α-olefin comonomers relative to the vinyl alcohol monomer is 0% to 5%. It can be understood that non-polar α-olefin comonomers, such as ethylene, butene, etc., can be added to PVA during polymerization to adjust the crystallization performance. If the addition amount is too high, it is easy to form a non-polar chain segment composed of continuous non-polar repeating units on the molecular chain, which leads to phase separation and affects the uniformity of the optical film. If the addition amount is too low, there is no crystallization regulation effect.

In an embodiment, the mass percentage of the non-polar α-olefin comonomer relative to the vinyl alcohol monomer is 0% to 3%.

In an embodiment, the additives include plasticizers, surfactants, antioxidants and ultraviolet absorbers for improving the performance of PVA film.

In an embodiment, the solvent includes water or dimethyl sulfoxide.

In an embodiment, the mass fraction of the solute in the film casting solution is 20% to 40%.

In an embodiment, the dissolution temperature of the film casting solution is 130°C to 170°C, and the dissolution time of the film casting solution is 2h to 10h.

In an embodiment, the plasticizer includes at least one of glycerol, diglycerol, polyglycerol, ethylene glycol and propylene glycol.

In an embodiment, the surfactant includes a nonionic surfactant and an anionic surfactant, the anionic surfactant includes potassium laurate, dodecylbenzene sulfonate, etc.; the nonionic surfactant includes polyoxyethylene lauryl ester, polyoxyethylene lauryl amino ester, polyoxyethylene lauric acid amide, etc.

In an embodiment, the mass of the plasticizer accounts for 8% to 15% of the mass of the PVA, and the mass of the surfactant accounts for 1.0‰ to 5.0‰ of the mass of the PVA. Too much plasticizer and surfactant will cause the plasticizer and surfactant to precipitate, resulting in poor optical properties of the PVA film.

In an embodiment, the mass fraction of the solute in the casting solution is 25% to 35%.

In an embodiment, the dissolution temperature of the casting solution is 145°C to 160°C, and the dissolution time is 4h to 7h.

In an embodiment, during the pre-drying of the film, m drying rollers are used in sequence to dry the film formed by the cast film, and the temperature of the m drying rollers shows a trend of gradually decreasing, where m is greater than or equal to 8 and less than or equal to 20. The temperature of the drying rollers is 30°C to 90°C. The above drying mode can ensure the uniformity of the film during the drying process and reduce the damage to the film caused by excessive temperature.

In an embodiment, the pre-dried film is heat-treated in an oven so that the heat treatment step is carried out continuously.

In an embodiment, in the step of defoaming, casting and pre-drying the film casting solution to obtain a pre-dried film, the casting solution is defoamed by an extruder, and the head pressure of the extruder is 1.0 MPa to 3.0 MPa. It can be understood that when the casting solution is defoamed by an extruder, the head pressure is within the above range. If the pressure is too low, the defoamed effect is poor, and if the pressure is too high, the equipment load is too large.

In an embodiment, in the step of dissolving PVA and additives in a solvent to obtain a casting solution, a disc filter is used to filter the casting solution. The pore size of the disc filter is 1um to 20um. The casting solution is filtered through the disc filter to remove impurities, gel, etc. The pore size of the filter is 1um to 20um, for example, 2um to 10um. If the pore size of the filter is too large, the impurity gel cannot be removed. If the pore size is too small, the pressure drop is too large, and the power load of the equipment increases.

In the present application, through the above-mentioned preparation method, each step is coordinated, such as adjusting the temperature and air flow rate during the heat treatment process, so that the external field parameters such as the temperature and wind speed curve during the processing are matched with the decreasing curve of the water content of the film and the crystallization process occurring inside, thereby obtaining a PVA film with a polymer structure having a large number, a small size and a moderate total crystallinity.

The present application starts from the microstructure of PVA, combines polymer crystallization theory with the production process of PVA film, and is conducive to the preparation of a more stable iodine-PVA complex. The present application starts from the raw materials for preparing PVA polarizing film, designs the crystal structure required by the raw materials to obtain a more stable iodine-PVA complex, which has the characteristics of more significant effects. In addition, it has the advantage of having little impact on the process, equipment, and product performance of downstream polarizing film processing.

The present application controls the crystal structure of the PVA film by controlling the temperature and wind speed at each stage of the heat treatment process, and can accurately and efficiently control the stability the crystal specific surface area and the crystal content of the PVA film crystal network, thereby helping to improve the durability of the polarizing film. In addition, the regulation based on the heat treatment process is simple and effective, does not require large-scale equipment changes, and has good adaptability.

Example

Example 1

Preparation of PVA film: adding a mixture of 32kg PVA polymer (degree of polymerization: 2400, degree of alcoholysis: 99.8%), sodium dodecylbenzene sulfonate, glycerol and antioxidant (in which mass of plasticizer content accounts for 15% of mass of PVA, and the content of surfactant accounts for 5‰ of the content of PVA) to a reactor along with 68L of deionized water, stirring the above mixture at 150°C and 0.4MPa for 6h to dissolve, and obtaining a PVA casting solution with a solute content of 35%. The formed casting solution is defoamed by an extruder, with a die pressure of 0.5MPa, and is filtered through a 6um filter before being extruded from a die. The film is then dried using a casting roller until the water content is reduced to 35%, followed by pre-drying with a drying roller to reduce the water content to 15%. Subsequently, the film enters an oven for heat treatment, and is finally rolled up to obtain a PVA film. The heat treatment is divided into five zones of equal length, with temperatures of 70°C, 72°C, 86°C, 118.5°C, and 65°C, respectively. By controlling the fan frequency, the wind speeds blowing onto the film surface are 9.2m/s, 9.8m/s, 16.4m/s, 13.8m/s, and 14.8m/s respectively.

Preparation of PVA polarizing film: preparing samples using a homemade solution and stretching device. The prepared PVA films were first treated in a constant temperature and humidity chamber for 24 hours at a temperature of 23±1°C and a humidity of 55±5%Rh. The balanced PVA films were cut into 60mm×40mm pieces along the stretching direction for later use. The process parameters for dyeing and stretching experiments are shown in Table 1 below. The dyeing solution and washing solution were prepared as needed, with 150mL used for each PVA film and discarded after a single use. The stretching solution was prepared according to the actual volume of the solution stretching device. The stretching of the specified stretching ratio was completed evenly within the specified time, and then the length was fixed and taken out. The remaining steps involved immersing the sample in a liquid container at a corresponding temperature for a specified time. Finally, the sample was dried in a blast oven at 65°C for 5 minutes. The swelling step was performed in deionized water.

Table 1. Dyeing and stretching process parameters

| Process | iodine | potassium iodide | boric acid | temperature | time | stretch ratio | extended length |
|---|---|---|---|---|---|---|---|
| Unit | g/L | g/L | g/L | °C | s | - | mm |
| Swelling | 0 | 0 | 0 | 27 | 140 | 1 | 0 |
| Dyeing | 0.335 | 12 | 0.6 | 30 | 242 | 1 | 0 |
| Washing | 0 | 0 | 32 | 35 | 77 | 1 | 0 |
| Stretching | 0 | 20 | 32 | 53 | 133 | 5.515 | 163 |
| Complementary color | 0 | 34 | 6 | 25 | 14 | 5.515 | 163 |

Measurement method for durability performance

The optical performance of the above-mentioned PVA polarizing film is tested. A spectrophotometer with polarization function is used to measure the transmittance spectrum with the polarization direction perpendicular to the film stretching direction, and the wavelength sampling interval is less than or equal to 5nm. The five transmittance values at 600, 605, 610, 615, and 620nm are averaged to avoid the influence of film interference on the transmittance measurement during the test. The transmittance is converted into absorbance. According to Lambert-Beer's law, the absorbance value is proportional to the content of polyiodide ions oriented along the stretching direction. The ratio of the above absorbance measured for the original sample to the absorbance measured after heat aging treatment at 95°C for 5h in a blast drying oven was calculated as an indicator of the durability of the sample.

Water absorption rate curve experiment

50mm×50mm PVA film samples were cut and swelled in 300mL of 30°C water for T minutes. After the specified time, the samples were removed, the surface water was scrape off and the sample was weighed, which is calculated as $m_1$. The sample was then dried in a blast oven at 120°C for 2h, and the weight was recorded as $m_2$. T can be in the range of 0.1min to 30min. A new film was used for each water absorption measurement and could not be reused. The water absorption was calculated as $(m_1 - m_2) / m_2 \times 100\%$.

In the present application, the water absorption at two time points of 1min and 15min was mainly used, and the values of the water absorption at 1min and the water absorption at 15min were calculated. This value can represent the ratio of the fast swelling part to the slow swelling part in the PVA film, which corresponds to the swelling of the amorphous region and the dissolution process of the crystal surface defect structure, respectively. The lower the value, the greater the proportion of the crystal surface defect structure. When the PVA film swells in water, the amorphous region absorbs water and expands first. For films with a thickness of 30um to 60um, this process mainly occurs within one minute. Subsequently, water molecules gradually destroy the hydrogen bonds of the crystal surface defect structures, destroying the less stable crystal surface defect structures until they encounter stable crystals. This process is slow and is currently believed to be basically completed within 15 minutes at 30°C. The less stable crystal surface defect structures are essentially wrapped around the stable crystals. Therefore, the greater the proportion of less stable crystal surface defect structures, the larger the specific surface area of the crystal particles and the smaller the size of individual crystals.

Example 2

This example was prepared in the same method and conditions as Example 1, with the only difference being that:
in the second and third temperature zones, the wind speeds blowing to the film surface were 10.5m/s and 17.3m/s respectively by controlling the fan frequency.

Example 3

This example was prepared in the same method and conditions as Example 1, with the only difference being that: the temperatures of the second and third temperature zones of the heat treatment stage were 84°C and 98°C respectively, and the wind speeds blowing to the film surface in the second and third temperature zones were 10.1m/s and 16.8m/s respectively by controlling the fan frequency.

Comparative Example 1

This example was prepared in the same method and conditions as Example 1, with the only difference being that: the temperature of the fourth section of the heat treatment section was 132°C, and the wind speeds blowing to the film surface in the second and third temperature zones were 10.5m/s and 17.3m/s respectively by controlling the fan frequency.

Comparative Example 2

This example was prepared in the same method and conditions as Example 1, with the only difference being that: the temperatures of the second, third, and fourth sections of the heat treatment section were 84°C, 98°C, and 123.5°C respectively, and the wind speeds blowing to the film surface in the second and third temperature zones were 6.5m/s and 12.5m/s respectively by controlling the fan frequency.

Comparative Example 3

This example was prepared in the same method and conditions as Example 1, with the only difference being that: the temperature of the fourth temperature zone of the heat treatment was 132°C, and the wind speeds blowing to the film surface in the second and third temperature zones were 6.5m/s and 12.5m/s respectively by controlling the fan frequency.

Comparative Example 4

This example was prepared in the same method and conditions as Example 1, with the only difference being that: the temperature of the fourth temperature zone of the heat treatment was 123.5°C, and the wind speeds blowing to the film surface in the second and third temperature zones were 10.5m/s and 17.3m/s respectively by controlling the fan frequency.

Comparative Example 5

This example was prepared in the same method and conditions as Example 1, with the only difference being that: the temperatures of the second, third and fourth temperature zones of the heat treatment were 84°C, 98°C and 123.5°C, respectively, and the wind speeds blowing to the film surface in the second and third temperature zones were 10.5m/s and 17.3m/s respectively by controlling the fan frequency.

Comparative Example 6

This example was prepared in the same method and conditions as Example 1, with the only difference being that: the temperature of the fourth temperature zone of the heat treatment was 123.5°C, and the wind speeds blowing to the membrane surface in the second and third temperature zones were 9.8m/s and 16.4m/s respectively by controlling the fan frequency.

Table 2. Experimental list of process parameters and test results of different examples and comparative examples

| item | Second temperature zone of heat treatment | Third temperature zone of heat treatment | Fourth temperature zone of heat treatment | Wind speed of second temperature zone of heat treatment | Wind speed of third temperature zone of heat treatment | Softening point | Degree of swelling | Crystallinity | Melting point | Water absorption at 1m in | Waterabsorption at 15m in | Ratio of water absorption at 1min to water absorption at 5min | Retention rate of absorbance at 610n m |
|---|---|---|---|---|---|---|---|---|---|---|---|---|---|
| | °C | °C | °C | m/s | m/s | °C | % | % | °C | % | % | / | % |
| Example 1 | 72 | 86 | 118.5 | 9.8 | 16.4 | 71.5 | 216 | 43.39 | 225.36 | 72.8 | 86.6 | 0.841 | 78.3 |
| Example 2 | 72 | 86 | 118.5 | 10.5 | 17.3 | 72.7 | 216 | 44.15 | 223.51 | 73.6 | 84.2 | 0.874 | 76.7 |
| Example 3 | 84 | 98 | 118.5 | 10.1 | 16.8 | 72.3 | 207 | 44.68 | 227.31 | 77.6 | 87.8 | 0.884 | 74.1 |
| comparative example 1 | 72 | 86 | 132 | 10.5 | 17.3 | 64.6 | 223 | 34.55 | 209.41 | 84.8 | 91.5 | 0.928 | 71.1 |
| comparative example 2 | 84 | 98 | 123.5 | 6.5 | 12.5 | 75.6 | 178 | 48.64 | 232.51 | 58.1 | 70.2 | 0.828 | 70.2 |
| comparative example 3 | 72 | 86 | 132 | 6.5 | 12.5 | 74.8 | 189 | 36.85 | 220.21 | 74.1 | 90.8 | 0.816 | 71.8 |
| comparative example 4 | 72 | 86 | 123.5 | 10.5 | 17.3 | 73.9 | 183 | 44.04 | 230.11 | 61.7 | 75.3 | 0.819 | 71.6 |
| comparative example 5 | 84 | 98 | 123.5 | 10.5 | 17.3 | 73.9 | 192 | 36.48 | 218.41 | 67.5 | 82.8 | 0.815 | 71.0 |
| comparative example 6 | 72 | 86 | 123.5 | 9.8 | 16.4 | 73.1 | 180 | 39.47 | 223.66 | 58.8 | 72.8 | 0.808 | 69.0 |

In the present application, $x/(x+y)$ is 0.82 to 0.93, the softening point of the PVA film is 65°C to 75°C, and the degree of swelling of the PVA film is 180% to 220%. Under the above conditions, the PVA polarizing film prepared using the PVA film exhibits improved durability.

As shown in Table 2, under the above conditions of the present application, the PVA polarizing film exhibits a better retention rate of absorbance at 610nm, indicating an improvement in the durability of the polarizing film.

Moreover, after the casting liquid in Examples 1, 2, and 3 is subjected to cast molding, drying, and heat treatment, the obtained PVA film satisfies the preparation process conditions of the present application and the conditions that $x/(x+y)$ in the PVA film is 0.82 to 0.93, and the polarizing film prepared by dyeing and stretching exhibits good durability. In Comparative Examples 1, 2, and 3, the processing parameters exceed the range described above, and a film with the desired crystal structure cannot be obtained, resulting in poor durability.

The above descriptions are only some embodiments of the present application, and are not intended to limit the scope of the present application. All equivalent structural transformations made using the contents of description and drawings of the present application under the technical concept of the present application, or direct/indirect application in other related technical fields, are included in the scope of the present application.

**Claims**

1. A polyvinyl alcohol film, **characterized in that** saturated water absorption of an amorphous structure in the polyvinyl alcohol film is x, water absorption increased due to destruction of a crystal surface defective structure in the polyvinyl alcohol film is y, and $x/(x+y)$ is 0.82 to 0.93;
the polyvinyl alcohol film has a softening point of 65°C to 75°C and a degree of swelling of 180% to 220%.

2. The polyvinyl alcohol film according to claim 1, wherein $x/(x+y)$ is 0.84 to 0.89.

3. The polyvinyl alcohol film according to claim 1 or 2, wherein the polyvinyl alcohol film has a crystallinity of 35% to 45%, and a melting point of 210°C to 230°C.

4. The polyvinyl alcohol film according to claim 1 or 2, wherein measuring the saturated water absorption of the amorphous structure in the polyvinyl alcohol film comprises:

   immersing at least one portion of the polyvinyl alcohol film in deionized water at a preset temperature for a preset time t1;
   removing the polyvinyl alcohol film after the amorphous structure in the polyvinyl alcohol film absorbs water;
   scraping off water droplets on a surface of the polyvinyl alcohol film and weighing the polyvinyl alcohol film, denoted as $m_{x1}$;
   drying and weighing the polyvinyl alcohol film, denoted as $m_{x2}$; and
   calculating the saturated water absorption x of the amorphous structure in the polyvinyl alcohol film using $x = (m_{x1} - m_{x2}) / m_{x2} \times 100\%$;
   measuring a sum of the saturated water absorption of the amorphous structure in the polyvinyl alcohol film and the water absorption increased due to the destruction of the crystal surface defect structure in the polyvinyl alcohol film comprises:

      immersing at least one portion of the polyvinyl alcohol film in deionized water at a preset temperature for a preset time t2 to destroy the crystal surface defect structure in the polyvinyl alcohol film;
      after the water absorption of the destroyed crystal surface defect structure is completed, taking out the polyvinyl alcohol film, scraping off water droplets on a surface of the polyvinyl alcohol film and weighing the polyvinyl alcohol film, denoted as $m_{x3}$;
      drying and weighing the polyvinyl alcohol film, denoted as mx4; and
      calculating a sum of the saturated water absorption of the amorphous structure in the polyvinyl alcohol film and the water absorption increased due to the destruction of the crystal surface defect structure in the polyvinyl alcohol film using $x+y = (m_{x3} - m_{x4})/m_{x4} \times 100\%$.

5. The polyvinyl alcohol film according to claim 4, wherein the preset temperature is 30°C, the preset time t1 is 1 min, and the preset time t2 is 15 min.

6. A preparation method for the polyvinyl alcohol film according to any one of claims 1 to 5, comprising:

dissolving polyvinyl alcohol and additives in a solvent to obtain a casting solution;
defoaming, casting and pre-drying the casting solution to obtain a pre-dried film;
heat treating the pre-dried film to obtain a polyvinyl alcohol film.

7. The preparation method for the polyvinyl alcohol film according to claim 6, wherein in the step of defoaming, casting and pre-drying the casting solution to obtain the pre-dried film, water content of a liquid film after casting is 15% to 35%; and/or

in the step of defoaming, casting and pre-drying the casting solution to obtain the pre-dried film, the pre-dried film has water content of 8% to 15%; and/or
in the step of heat treating the pre-dried film to obtain the polyvinyl alcohol film, the polyvinyl alcohol film has water content of 0.1% to 5%.

8. The preparation method for the polyvinyl alcohol film according to claim 7, wherein the liquid film after casting has water content of 18% to 30%; and/or the polyvinyl alcohol film has water content of 0.5% to 3.5%.

9. The preparation method for the polyvinyl alcohol film according to any one of claims 6 to 8, wherein the heat treating the pre-dried film to obtain the polyvinyl alcohol film comprises:
sequentially heat treating the pre-dried film using n temperature zones to obtain the polyvinyl alcohol film, wherein temperature of the n temperature zones presents a trend of first increasing and then decreasing, and n is greater than or equal to 2 and less than or equal to 20.

10. The preparation method for the polyvinyl alcohol film according to claim 9, wherein the sequentially heat treating the pre-dried film using the n temperature zones to obtain the polyvinyl alcohol film, temperature of the n temperature zones presenting a trend of first increasing and then decreasing, comprises:

the heat treating for the pre-dried film is a time of t, in 0%t to 20%t, heat treating the pre-dried film at a first temperature zone between 50°C and 80°C;
in 20%t to 40%t, heat treating the pre-dried film at a second temperature zone between 55°C and 95°C;
in 40%t to 60%t, heat treating the pre-dried film at a third temperature zone between 70°C and 100°C;
in 60%t to 80%t, heat treating the pre-dried film at a fourth temperature zone between 100°C and 130°C;
in 80%t to 100%t, heat treating the pre-dried film at a fifth temperature zone between 50°C and 98°C; and
obtaining the polyvinyl alcohol film.

11. The preparation method for the polyvinyl alcohol film according to claim 10, wherein the sequentially heat treating the pre-dried film using the n temperature zones comprises:

drying the pre-dried film using a fan;
wherein a wind speed of the fan in the first temperature zone is 5.9m/s to 12.4m/s, a wind speed of the fan in the second temperature zone is 6.6m/s to 13.1m/s, a wind speed of the fan in the third temperature zone is 13.2m/s to 19.7m/s, a wind speed of the fan in the fourth temperature zone is 10.5m/s to 17.0m/s, and a wind speed of the fan in the fifth temperature zone is 11.5m/s to 18.0m/s.

12. The preparation method for the polyvinyl alcohol film according to claim 11, wherein the wind speed of the fan in the first temperature zone is 8.1m/s to 10.3m/s, the wind speed of the fan in the second temperature zone is 8.8m/s to 10.9m/s, the wind speed of the fan in the third temperature zone is 15.4m/s to 17.5m/s, the wind speed of the fan in the fourth temperature zone is 12.7m/s to 14.9m/s, and the wind speed of the fan in the fifth temperature zone is 13.7m/s to 15.8m/s.

## INTERNATIONAL SEARCH REPORT

| International application No. |
| --- |
| **PCT/CN2024/134284** |

| A. | CLASSIFICATION OF SUBJECT MATTER |
| --- | --- |

C08L29/04(2006.01)i; C08J5/18(2006.01)i; G02B5/30(2006.01)i

According to International Patent Classification (IPC) or to both national classification and IPC

| B. | FIELDS SEARCHED |
| --- | --- |

Minimum documentation searched (classification system followed by classification symbols)

IPC:C08L, C08J, G02B

Documentation searched other than minimum documentation to the extent that such documents are included in the fields searched

Electronic data base consulted during the international search (name of data base and, where practicable, search terms used)

CNABS, CNTXT, DWPI, WPABS, WPABSC, ENTXTC, ENTXT, CNKI, Web of science: 聚乙烯醇, 膜, 吸水量, 结晶度, 熔点, 含水量, 分段加热, 多段, 热处理, 预热, polyvinyl alcohol, film, water absorption, crystallinity, melting point, water content, segmented heating, multistage, heat treatment, preheat

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 117946433 A (ANHUI WANWEI ADVANCED FUNCTIONAL FILM MATERIAL RESEARCH INSTITUTE CO., LTD.) 30 April 2024 (2024-04-30) entire document | 1-12 |
| A | KR 20070122355 A (LG CHEMICAL LTD.) 31 December 2007 (2007-12-31) entire document | 1-12 |
| A | WO 2008111702 A1 (LG CHEMICAL LTD.) 18 September 2008 (2008-09-18) entire document | 1-12 |
| A | WO 2023182267 A1 (KURARAY CO., LTD.) 28 September 2023 (2023-09-28) entire document | 1-12 |

☐ Further documents are listed in the continuation of Box C.    ☑ See patent family annex.

| | |
| --- | --- |
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **11 June 2025** | **16 June 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/134284**

| Patent document cited in search report | | | Publication date (day/month/year) | Patent family member(s) | | | Publication date (day/month/year) |
|---|---|---|---|---|---|---|---|
| CN | 117946433 | A | 30 April 2024 | None | | | |
| KR | 20070122355 | A | 31 December 2007 | WO | 2008002015 | A1 | 03 January 2008 |
| | | | | KR | 100886322 | B1 | 04 March 2009 |
| | | | | TW | 200813132 | A | 16 March 2008 |
| | | | | CN | 101479328 | A | 08 July 2009 |
| WO | 2008111702 | A1 | 18 September 2008 | TW | 200844503 | A | 16 November 2008 |
| WO | 2023182267 | A1 | 28 September 2023 | TW | 202400695 | A | 01 January 2024 |
| | | | | JPWO | 2023182267 | A1 | 28 September 2023 |
| | | | | KR | 20240167025 | A | 26 November 2024 |
| | | | | CN | 118900880 | A | 05 November 2024 |

Form PCT/ISA/210 (patent family annex) (July 2022)

## REFERENCES CITED IN THE DESCRIPTION

**Patent documents cited in the description**

- CN 202411507815